# EUROPEAN PATENT APPLICATION

(11) **EP 4 376 463 A1**
(43) Date of publication of application: **29.05.2024**
(21) Application number: 22845603.4
(22) Date of filing: 25.02.2022
(51) Int. Cl.: H04W 16/26, H04B 7/15, H04W 28/06, H04W 84/12, H04W 12/033

(54) **WIRELESS COMMUNICATION DEVICE AND WIRELESS COMMUNICATION METHOD**

(30) Priority: 19.07.2021 JP 2021118599
(71) Applicant: Sony Group Corporation, Tokyo 108-0075 (JP)
(72) Inventor: TANAKA, Ken, Tokyo 108-0075 (JP); TANAKA, Yusuke, Tokyo 108-0075 (JP)
(74) Representative: D Young & Co LLP
(86) International application number: PCT/JP2022/007807
(87) International publication number: WO 2023/002663

(57) **Abstract**

The present technology relates to a wireless communication device and a wireless communication method that enable to transmit data to be relayed to another wireless communication device with a low delay. The wireless communication device controls to send a frame including relay data to be relayed in another wireless communication device and information regarding an access category of the relay data, to the another wireless communication device. The present technology can be applied to a wireless communication system.

## Description

### TECHNICAL FIELD

The present technology relates to a wireless communication device and a wireless communication method and more particularly, relates to a wireless communication device and a wireless communication method enabled to transmit data to be relayed to another wireless communication device with a low delay.

### BACKGROUND ART

In Institute of Electrical and Electronics Engineers (IEEE) 802.11, a communication protocol for a multi-hop network (relay network) is stipulated. Similarly, in IEEE 802.11, as quality of service (QoS) control, control of backoff time in carrier sense multiple access with collision avoidance (CSMA/CA) is stipulated on the basis of the access category of data traffic.

In QoS control in a relay network, a relay station (relay node) analyzes a relayed packet, reads information included in the user priority field stipulated in IEEE 802.1D or the type of service (ToS) field of an Internet protocol (IP) packet in data, and then designates the access category of the data in accordance with a mapping policy of the access category held by the relay node.

The data is submitted to a queue in the relay node in accordance with the designated access category, and the data submitted to the queue is transmitted as soon as the right of sending is granted.

A terminal architecture of a wireless local area network (LAN) is set forth in IEEE 802.11 (2016), and in order to carry out the above-described operation, a relay node needs to undergo internal processes for relay data to be relayed, such as encryption decoding of a medium access control (MAC) protocol data unit (MPDU) and defragmentation into a MAC service data unit (MSDU). Along with this, the user priority field stipulated in IEEE 802.1D or the ToS field of the IP packet is analyzed, the access category of the relay transmission is designated in accordance with the mapping policy of the access category of the relay node, and then data is submitted to the relevant queue. Since such processes are undergone, it takes time for the relay data received by the relay station to be queued in the sending queue of the relay station.

In relation to this, in Patent Document 1, the queue is defined with regard to the number of hops and the access category in multi-hop transmission, and by controlling so as to shorten the residence time of each piece of relay data in the queue according to the number of hops and the access category, an end-to-end decrease in delay is implemented.

### CITATION LIST

### PATENT DOCUMENT

Patent Document 1: Japanese Patent Application Laid-Open No. 2007-60365

### SUMMARY OF THE INVENTION

### PROBLEMS TO BE SOLVED BY THE INVENTION

Usually, an end-to-end transmission rate in relay transmission needs to be enhanced for higher speed. However, even in a case where the right of sending can be granted to the relay node immediately after the relay data is transmitted to that relay node without errors, there is a concern that the relay transmission is not allowed to be carried out due to the queuing time.

The present technology has been made in view of such a situation and enables transmission of data to be relayed to another wireless communication device with a low delay.

### SOLUTIONS TO PROBLEMS

A wireless communication device according to a first aspect of the present technology includes: a generation unit that generates a frame including relay data to be relayed and information regarding an access category of the relay data; and a wireless control unit that causes another wireless communication device to send the generated frame.

A wireless communication device according to a second aspect of the present technology includes a wireless control unit that receives relay data to be relayed and a frame including information regarding an access category of the relay data, and queues a data unit including the relay data having the same access category on the basis of the information regarding the access category.

In the first aspect of the present technology, a frame including relay data to be relayed and information regarding an access category of the relay data is generated, and the generated frame is sent to another wireless communication device.

In the second aspect of the present technology, a frame including relay data to be relayed and information regarding an access category of the relay data is received, and a data unit including the relay data having the same access category is queued on the basis of the information regarding the access category.

### BRIEF DESCRIPTION OF DRAWINGS

Fig. 1 is a diagram illustrating an architecture of a wireless LAN in a MAC Sublayer.
Fig. 2 is a diagram illustrating a configuration example of a wireless communication system according to an embodiment of the present technology.
Fig. 3 is a block diagram illustrating a configuration example of a wireless communication device.
Fig. 4 is a diagram illustrating an architecture of a wireless LAN in a MAC Sublayer in the present technology.
Fig. 5 is a diagram illustrating an architecture of a wireless LAN in a MAC Sublayer in the present technology.
Fig. 6 is a diagram illustrating a sequence explaining an overall process of the wireless communication system in the embodiment of the present technology.
Fig. 7 is a diagram illustrating a configuration example of a frame notified as capability information.
Fig. 8 is a diagram illustrating a first configuration example of a frame notified in relay transmission.
Fig. 9 is a diagram illustrating a second configuration example of a frame notified in relay transmission.
Fig. 10 is a diagram illustrating a third configuration example of a frame notified in relay transmission.
Fig. 11 is a flowchart explaining a process in a sending source device when sending a frame.
Fig. 12 is a flowchart diagram explaining a process in a sending source device when sending a frame.
Fig. 13 is a block diagram illustrating a configuration example of a computer.

### MODE FOR CARRYING OUT THE INVENTION

Hereinafter, modes for carrying out the present technology will be described. The description will be given in the following order.
1. Conventional Technology
2. Embodiments
3. Others

### <1. Conventional Technology>

In recent years, in high-definition video transmission for augmented reality (AR) and virtual reality (VR), 4K and 8K, and the like, a very large amount of data is handled. For this reason, in order to ensure high communication quality at any place in a wireless local area network (LAN), a multi-hop network (or a relay network or relay transmission) has attracted attention, and IEEE 802.11s and EasyMesh (registered trademark) have been standardized. In addition, along with this, demand for real-time transmission to remote locations is also increasing in the context of factory automation and the like, and low-delay transmission is also attracting attention.

In particular, in a wireless local area network (LAN), CSMA/CA is adopted as an access scheme for the purpose of reducing interference with peripheral terminals located around a sending terminal that sends a signal. Specifically, in a case where a peripheral terminal has sent a wireless signal before sending of the sending terminal, the sending terminal refrains from sending until sending of the wireless signal is completed and carries out the sending after a random standby time (backoff time) has elapsed since the sending of the wireless signal is completed.

Depending on data, immediate sending is desired for some data but not desired for other data. In the wireless LAN, priority can be allocated to data. Specifically, the backoff time is defined for each type of data, and the backoff time is controlled so as to be shortened for data requiring immediate sending for the reason of voice communication or the like.

At this time, the type of data is determined with reference to information included in the user priority field stipulated in IEEE 802.1D or information included in the type of service (ToS) field of the IP packet.

The type of the data mentioned above is called an access category (AC) and is classified into four classes of AC_background (BK), AC_best effort (BE), AC_video (VI), and AC_voice (VO). Pieces of data classified into the access categories are submitted to the queues of each access category within the device and sequentially sent. Channel access by such data classification for each access category and control of backoff time is called enhanced distributed channel access (EDCA).

Similarly, also in a multi-hop network in a wireless LAN, each relay node that performs relay from a source station (source node) to a sink node constituted by a station (STA) or the like independently carries out channel access. At that time, it is important to implement low-delay transmission from the source node to the sink node, that is, in an end-to-end approach.

For example, in Patent Document 1, the queue is defined with regard to the number of hops and the access category in multi-hop transmission, and by shortening the time of residence, in the queue, of relay data that is data to be relayed in the relay node, an end-to-end decrease in delay is implemented.

In addition, Patent Document 1 describes that each time relay data is transmitted to each relay node, the relay node determines the access category by analyzing the relay data and reading the user priority field stipulated in IEEE 802.1D or the ToS field of the IP packet.

That is, in order to determine the access category by the technology of Patent Document 1, it is necessary to analyze the relay data and read the user priority field stipulated in IEEE 802.1D or the ToS field of the IP packet, and thus, it takes time for the relay station to submit the relay data to the queue and send the relay data from when receiving the relay data. Note that a special method for determining the access category for the wireless LAN multi-hop network is not yet defined in IEEE 802.11.

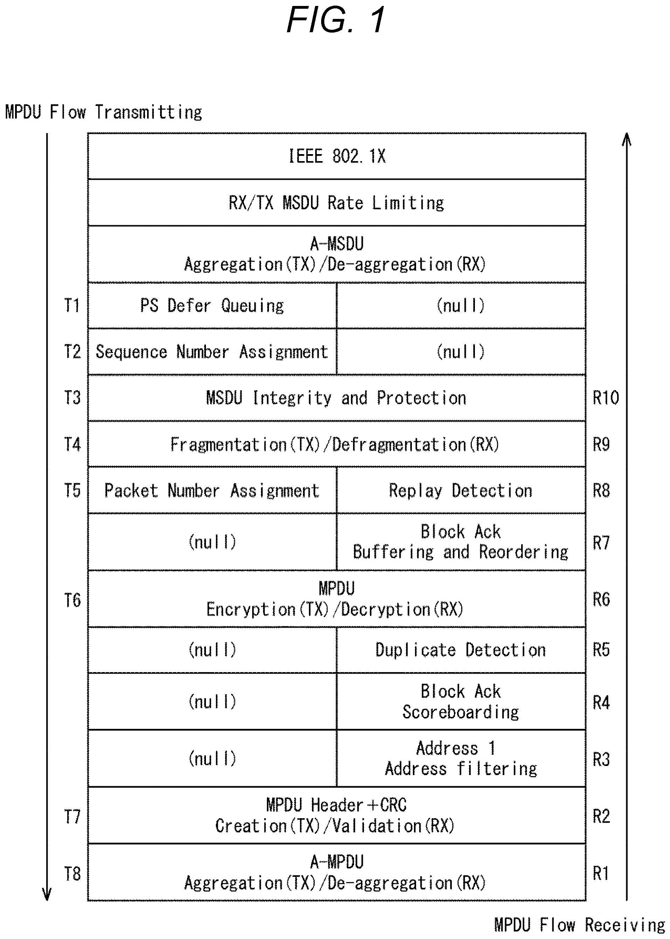

Here, in 802.11-2016 - IEEE Standard for Information technology - Telecommunications and information exchange between systems Local and metropolitan area networks-Specific requirements - Part 11: Wireless LAN Medium Access Control (MAC) and Physical Layer (PHY) Specifications (hereinafter, referred to as Cited Document 1), an architecture of a wireless LAN in a media access control (MAC) Sublayer is disclosed as in Fig. 1.

Fig. 1 is a diagram illustrating an architecture of a wireless LAN-compatible terminal in the MAC Sublayer. Note that the first to third rows from the top indicate that processes for IEEE 802.1X, RX/TX MSDU Rate Limiting, aggregated (A)-MSDU aggregation (concatenation), and A-MSDU deaggregation (cancellation of concatenation) are executed.

In the drawing, null indicates that no process is performed. In addition, RX indicates a process performed at the time of reception, and TX indicates a process performed at the time of sending. Hereinafter, a series of operations carried out at the time of reception will be referred to as a reception flow, and a series of operations carried out at the time of sending will be referred to as a sending flow.

As indicated by the arrow on the right side, the order of the reception flow for the MPDU that is a data unit including the relay data is illustrated from the bottom to the top in the drawing. Note that the A-MPDU represents that a plurality of MPDUs is concatenated.

In the relay node, when the MPDU is received, the processes are executed in the order from R1 to R10.
R1. Deaggregation of A-MPDU
R2. Error detection and correction (validation) for MPDU header and error detection and correction by cyclic redundancy check (CRC)
R3. Filtering by address of destination device (RA: receiving STA address)
R4. Scoreboading of block acknowledgement (Ack)
R5. Duplicate detection
R6. Decryption of encryption for MPDU
R7. Buffering and reordering of block Ack (buffering and recordering)
R8. Detection of replay attack (replay detection)
R9. Defragmentation of MPDU to MSDU
R10. Integrity check and protection of MSDU (integrity and protection)

Meanwhile, as indicated by the arrow on the left side, the order of the sending flow for the MPDU is illustrated from the top to the bottom in the drawing.

In the relay node, when the MPDU is to be sent, the processes are executed in the order from T1 to T8.
T1. Dequeuing (PS defer queuing)
T2. Sequence number assignment
T3. Integrity check and protection of MAC service data unit (MSDU) (integrity and protection)
T4. Fragmentation of MSDU
T5. Packet number assignment
T6. Encryption of MPDU
T7. MPDU header generation and CRC generation (creation)
T8. Generation of A-MPDU that is aggregation of MPDUs

In the relay node, when the access category is assigned, decryption of encryption for the MAC protocol data unit (MPDU) in R6, defragmentation in R9, and the like are required in order to read the user priority field stipulated in IEEE 802.1D or the ToS field of the IP packet. In addition, in the relay node, processes such as fragmentation in T4 and encryption in T6 are required after the access category is assigned and queuing is carried out.

Therefore, in order to relay and transmit the relay data with a lower delay in the relay node, it becomes necessary to reduce the time taken for these processes.

Thus, in the present technology, a frame including relay data to be relayed and information regarding an access category of the relay data is generated, and the generated frame is sent to another wireless communication device.

This enables to transmit data to be relayed with a low delay in a multi-hop network.

Hereinafter, embodiments of the present technology will be described in detail.

### <2. Embodiments>

### <Wireless Communication System of Present Technology>

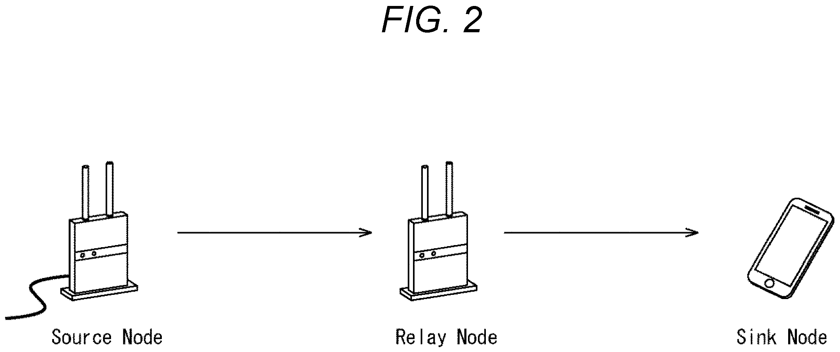

Fig. 2 is a diagram illustrating a configuration example of a wireless communication system according to an embodiment of the present technology.

The wireless communication system in Fig. 2 is made up of one source node, a relay node, and a sink node.

The source node and the relay node operate as access points (APs). The sink node operates as a station (STA) .

Although Fig. 2 illustrates an example in which the source node and the relay node are connected and the relay node and the sink node are connected, a plurality of relay nodes and sink nodes may be configured.

For example, the wireless communication system may have a configuration in which the source node and a relay node #1 are connected, the relay node #1 and a relay node #2 are connected, and the relay node #2 and a plurality of sink nodes are connected.

### <Configuration Example of Wireless Communication Device>

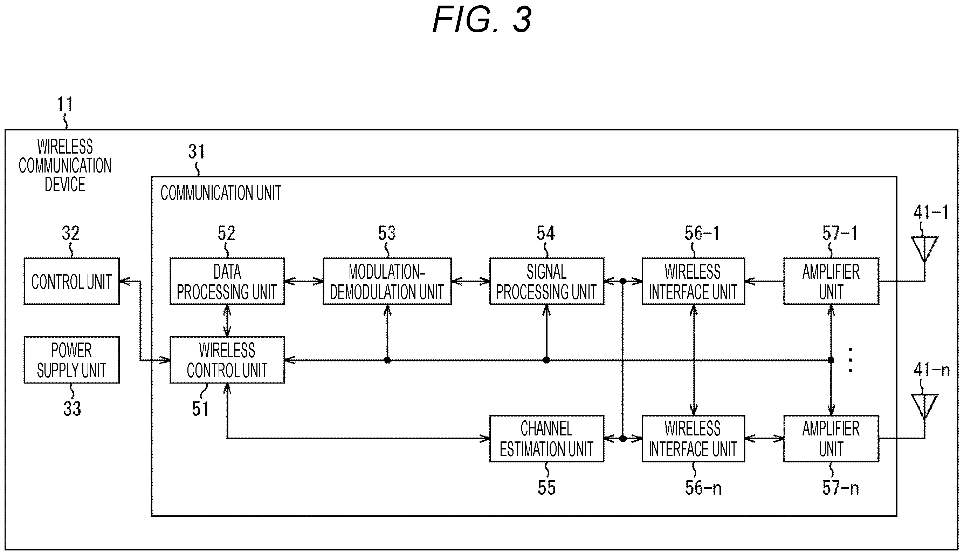

Fig. 3 is a block diagram illustrating a configuration example of a wireless communication device.

A wireless communication device 11 illustrated in Fig. 3 is a wireless communication device constituting the source node, the relay node, and the sink node and operates as an AP or an STA.

The wireless communication device 11 is constituted from a communication unit 31, a control unit 32, a power supply unit 33, and antennas 41-1 to 41-n. In a case where it is not necessary to distinguish between the antennas 41-1 to 41-n, the antennas 41-1 to 41-n will be collectively referred to as antennas 41.

The wireless communication device 11 may have a configuration including a plurality of communication units 31.

The communication unit 31 sends and receives data. The communication unit 31 has a configuration including a wireless control unit 51, a data processing unit 52, a modulation-demodulation unit 53, a signal processing unit 54, a channel estimation unit 55, wireless interface units 56-1 to 56-n, and amplifier units 57-1 to 57-n.

Note that the wireless interface units 56-1 to 56-n and the amplifier units 57-1 to 57-n will be collectively referred to as wireless interface units 56 and amplifier units 57, respectively, in a case where it is not necessary to distinguish between the wireless interface units 56-1 to 56-n and the amplifier units 57-1 to 57-n.

The wireless control unit 51 transfers information between the respective units constituting the communication unit 31. In addition, the wireless control unit 51 performs parameter setting for the modulation-demodulation unit 53 and the signal processing unit 54, packet scheduling for the data processing unit 52, parameter setting and sending electric power control for the wireless interface units 56 and the amplifier units 57.

At the time of sending, the data processing unit 52 generates a packet for wireless sending from the data supplied from a protocol upper layer such as a network layer and carries out data processing such as attaching a header for media access control (MAC) or attaching an error detection code. The data processing unit 52 outputs the data after the data processing to the modulation-demodulation unit 53.

At the time of reception, the data processing unit 52 carries out data processing such as MAC header analysis, packet error detection, and reorder processing on a symbol stream supplied from the modulation-demodulation unit 53 and outputs the data after the data processing to a protocol upper layer.

At the time of sending, the modulation-demodulation unit 53 encodes, interleaves, and modulates the data supplied from the data processing unit 52 on the basis of setting information set by the control unit 32 or the wireless control unit 51 and generates a data symbol stream to supply the generated data symbol stream to the signal processing unit 54.

At the time of reception, the modulation-demodulation unit 53 performs processing opposite to the processing at the time of sending, on the data symbol stream supplied from the signal processing unit 54, and outputs the processed data symbol stream to the data processing unit 52 and the control unit 32.

At the time of sending, the signal processing unit 54 performs signal processing intended for space separation, on the data symbol stream supplied from the modulation-demodulation unit 53, as necessary, and outputs one or more sending symbol streams obtained as a result of the signal processing to each wireless interface unit 56. Note that, at that time, instead of space separation, sending with any delay amount assigned to each antenna 41 (hereinafter, CSD: cyclic shift delay) may be applied to the sending.

At the time of reception, the signal processing unit 54 performs signal processing on a reception symbol stream supplied from each wireless interface unit 56 and performs space separation for the stream as necessary to output the stream to the modulation-demodulation unit 53.

The channel estimation unit 55 calculates complex channel gain information on a propagation path from a preamble part and a training signal part of the signal supplied from each wireless interface units 56. The calculated complex channel gain information is used for demodulation processing in the modulation-demodulation unit 53 and space separation in the signal processing unit 54 via the control unit 32.

At the time of sending, the wireless interface unit 56 converts the sending symbol stream supplied from the signal processing unit 54 into an analog signal, carries out filtering, up-conversion to a carrier frequency, and phase control, and outputs the analog signal after the phase control to the antenna 41 or the amplifier unit 57.

At the time of reception, the wireless interface unit 56 performs phase control, down-conversion, and inverse filtering on the analog signal supplied from the antenna 41 or the amplifier unit 57 and outputs the reception symbol stream that is a result of conversion into a digital signal to the signal processing unit 54 or the channel estimation unit 55.

At the time of sending, the amplifier unit 57 amplifies the analog signal supplied from the wireless interface unit 56 to a predetermined electric power and outputs the analog signal with the amplified electric power to the antenna 41.

At the time of reception, the amplifier unit 57 amplifies the analog signal supplied from the antenna 41 to a predetermined electric power and outputs the analog signal with the amplified electric power to the wireless interface unit 56.

A part of the function of the amplifier unit 57 may be included in the wireless interface unit 56. In addition, a part of the function of the amplifier unit 57 may work as a component outside the communication unit 31.

The control unit 32 is constituted by a central processing unit (CPU), a read only memory (ROM), a random access memory (RAM), and the like. The control unit 32 executes a program stored in the ROM or the like and controls the wireless control unit 51 and the power supply unit 33. In addition, the control unit 32 may perform a part of the operation of the wireless control unit 51 in place of the wireless control unit 51. In addition, the wireless control unit 51 and the control unit 32 may be configured as one block.

The power supply unit 33 is made up of a battery power supply or a fixed power supply and supplies electric power to each unit of the wireless communication device 11.

Note that the antenna 41, the amplifier unit 57, and the wireless interface unit 56 may constitute one set for each same branch number, and one or two or more sets may work as components of the wireless communication device 11. In addition, the communication unit 31 is implemented by one or more large scale integrated circuits (LSIs).

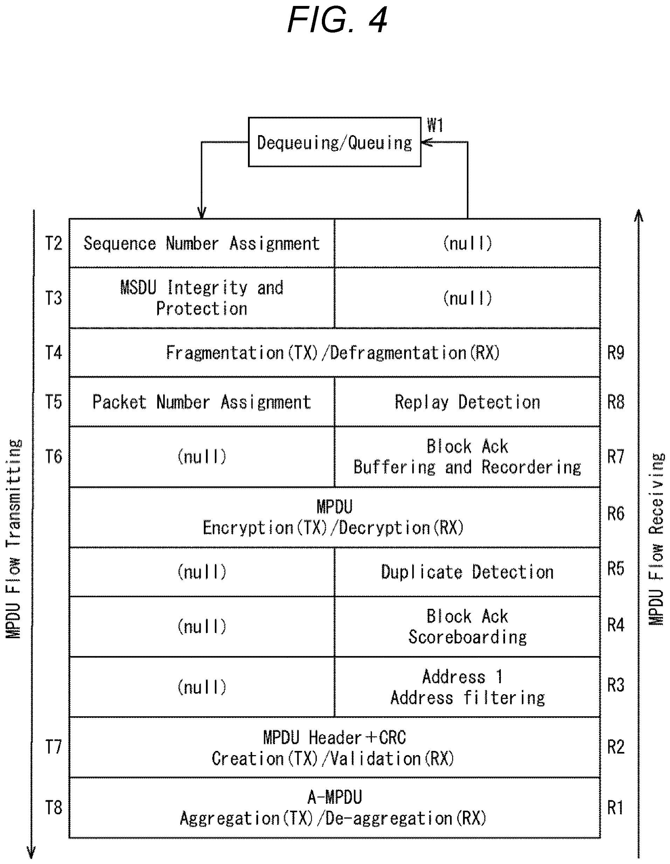

Note that the wireless control unit 51 and the data processing unit 52 in the relay node carry out processing as illustrated in Fig. 4.

Fig. 4 is a diagram illustrating an architecture of a wireless LAN in a MAC Sublayer in the present technology.

In Fig. 4, parts corresponding to those in Fig. 1 are denoted by the same reference signs and are basically similar to those in Fig. 1, and thus description thereof will be omitted.

As indicated by the arrow on the right side, the order of architecture in the reception flow for the MPDU is illustrated from the bottom to the top in the drawing.

When receiving the MPDU, the wireless control unit 51 and the data processing unit 52 of the relay node execute processes in the order from R1 to R9 and W1.
R1. Deaggregation of A-MPDU
R2. Error detection and correction (validation) for MPDU header and error detection and correction by cyclic redundancy check (CRC)
R3. Filtering by address of destination device (RA)
R4. Scoreboading of block Ack
R5. Duplicate detection
R6. Decryption of encryption for MPDU
R7. Buffering and reordering of block Ack (buffering and recordering)
R8. Detection of replay attack (replay detection)
R9. Defragmentation of MPDU to MSDU
W1. Queuing

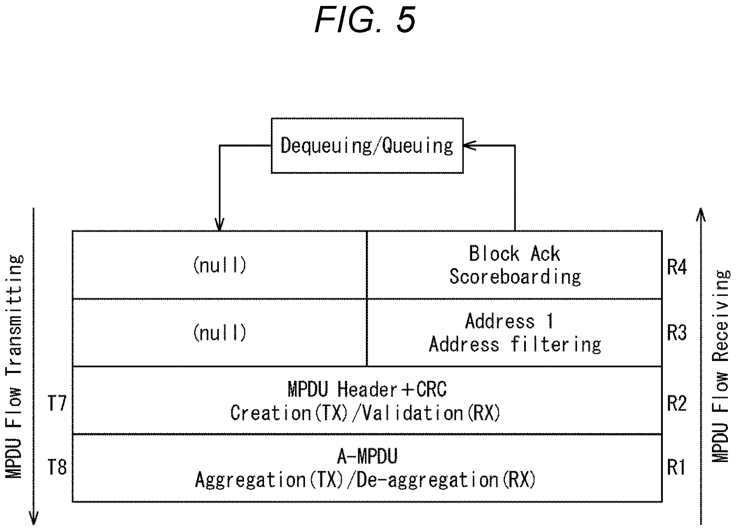

Note that the processes may be partially omitted as necessary, and for example, the detection of the replay attack in R8 may be omitted. In addition, as illustrated in Fig. 5, the processes in R5 to R9 may be omitted. Furthermore, at the time of electric power saving of the wireless communication device 11, queuing in W1 may be suppressed. For example, in a case where the electric power saving operation is ongoing at a certain moment, queuing is temporarily stopped, but in a case where the electric power saving operation is released, queuing that has been stopped may be resumed. In addition, the MAC address may be used as the address of the destination device in R3.

As indicated by the arrow on the left side, the order of architecture in the sending flow for the MPDU is illustrated from the top to the bottom in the drawing.

When sending the MPDU, the wireless control unit 51 and the data processing unit 52 of the relay node execute processes in the order from W1 and T2 to T8.
W1. Dequeuing
T2. Sequence number assignment
T3. Integrity check and protection of MSDU (integrity and protection)
T4. Fragmentation of MSDU
T5. Packet number assignment
T6. Encryption of MPDU
T7. MPDU header generation and CRC generation (creation)
T8. Generation of A-MPDU that is aggregation of MPDUs

Note that the processes may be partially omitted as necessary, and for example, the processes in T2 to T6 may be omitted as illustrated in Fig. 5. Furthermore, at the time of electric power saving of the wireless communication device 11, dequeuing in W1 may be suppressed similarly to the above-described suppression of queuing.

### <Example of Overall Processing Sequence>

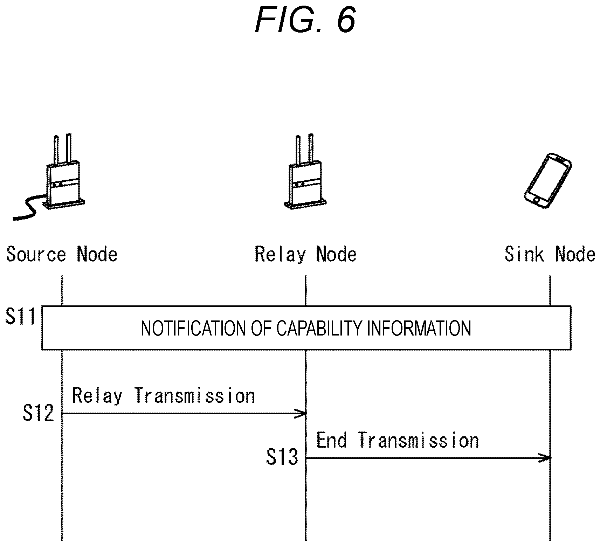

Fig. 6 is a diagram illustrating a sequence explaining an overall process of the wireless communication system in the embodiment of the present technology.

In step S11, the source node, the relay node, and the sink node notify each other of capability information including information such as capability of each device.

In step S12, the source node performs relay transmission that is transmission from the source node to the relay node, for the relay node. In the relay transmission, the relay data is sent in a frame with any one of first to third configurations to be described later.

In step S13, the relay node performs end transmission that is transmission from the relay node to the sink node, for the sink node. In the end transmission, the relay data may be sent in a frame with an existing configuration, or may be sent in a frame with a configuration used in the relay transmission. After that, the overall process ends.

Note that, in the relay transmission in step S12 and the end transmission in step S13, the right of sending may be ensured by notification of request to send (RTS) and clear to send (CTS) disclosed in Cited Document 1 immediately before transmission.

In addition, immediately after the relay transmission, the relay node may notify the source node of an Ack frame or a block Ack frame disclosed in Cited Document 1, as a reception acknowledgement. Similarly, also immediately after the end transmission, the sink node may notify the relay node of the Ack frame or block Ack frame.

Furthermore, in a case where there is a plurality of relay nodes, that is, in a case where transmission occurs in the order of "transmission between the source node and the relay node #1", "transmission between the relay node #1 and the relay node #2", and "transmission between the relay node #2 and the sink node" as an example, "transmission between the relay node #1 and the relay node #2" is also defined as relay transmission.

The notification of the capability information may be carried out only between the connected wireless communication devices. For example, notification may be made only between the source node and the relay node and between the relay node and the sink node.

However, the notification of the capability information may be carried out between wireless communication devices that are not directly connected, as necessary. Specifically, the source node may be notified of information indicating the capability of the sink node through the relay node. In addition, in a case where there is a plurality of relay nodes, the source node may be notified of information indicating the capability of the plurality of relay nodes through the relay node.

Note that, although not illustrated in the drawing, the timing of designating the routing of the multi-hop network and the notification of the routing may be carried out after the notification of the capability information.

In addition, the key exchange for encryption may be carried out at the same timing as or at a timing advanced from the notification of the capability information.

Hereinafter, the process in each step in Fig. 6 will be specifically described.

### <Notification of Capability Information>

In the notification of the capability information in step S11 in Fig. 6, the source node, the relay node, and the sink node notify each other of information regarding the capability of the own device. The capability mentioned here refers to the functions as a source node and a relay node, and the processing flow of the wireless control unit 51 and the data processing unit 52 for the MPDU at the time of relay transmission within the device described above with reference to Fig. 4 or 5, but these are not restrictive.

The notification of the capability information may be included in, for example, a beacon signal periodically sent by each device or an information notification (assocoation) for establishing a connection between devices after the beacon signal, and carried out.

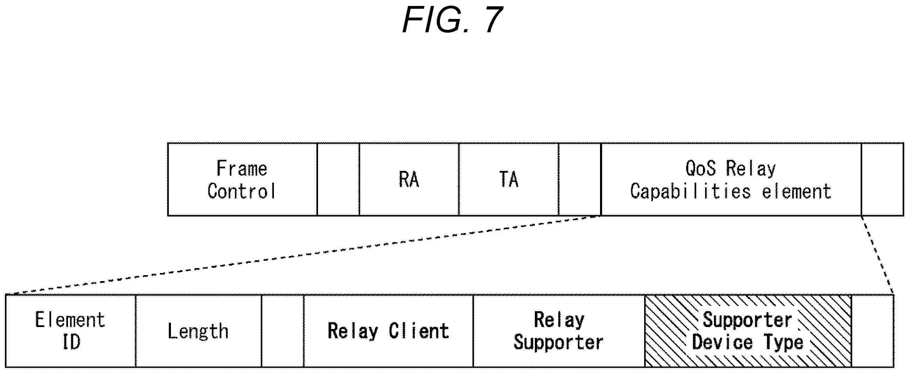

Fig. 7 is a diagram illustrating a configuration example of a frame notified as the capability information.

The frame in Fig. 7 has a configuration including Frame Control, Receiving STA address (RA), Transmitting STA address (TA), and QoS Capabilities element. Note that the components are not restricted only to these. In addition, hatching in Fig. 6 indicates a field including information that is characteristic in the present technology. This similarly applies to the following diagrams.

The Frame Control includes information indicating that this frame is a frame to be notified as the capability information.

The RA and the TA include information indicating a destination device and a sending source device, respectively. For example, a device-specific MAC address may be indicated in the RA and the TA.

The QoS Capabilities element includes information indicating the functions of the devices as a source node and a relay node, and information indicating a processing flow of the wireless control unit 51 and the data processing unit 52 for the MPDU at the time of relay transmission in the relay node illustrated in Fig. 4 or 5.

The QoS Capabilities element has a configuration including each of the fields of Element ID, Length, Relay Client, Relay Supporter, and Supporter Device Type.

The Element ID includes information indicating that the concerned element is a QoS Capabilities element.

The Length includes information indicating a bit length of the QoS Capabilities element.

The Relay Client includes information indicating the presence or absence of the function as the source node in the device that is to send this frame.

The Relay Supporter includes information indicating the presence or absence of the function as the relay node in the device that is to send this frame.

The Supporter Device Type includes information indicating the processing order for the MPDU that can be carried out at the time of relay transmission in a case where the device that is to send this frame operates as a relay node.

Specifically, the Supporter Device Type includes information indicating which of the processing order illustrated in Fig. 4 and the processing order illustrated in Fig. 5 is supported or information indicating that neither of the processing orders is supported. In addition, the Supporter Device Type may include information indirectly indicating whether or not decryption of encryption can be carried out.

### <Relay Transmission>

In a case where the source node holds the relay data for the sink node after notification of the capability information is carried out in the source node, the relay node, and the sink node in step S11 in Fig. 6, the source node sends the relay data to the relay node in step S12.

Note that, also in a case where the relay node that has received the relay data from the source node relays the relay data again to another relay node connected between the relay node and the sink node that is the final destination, the relay transmission process is similarly performed.

### <First Configuration Example of Frame>

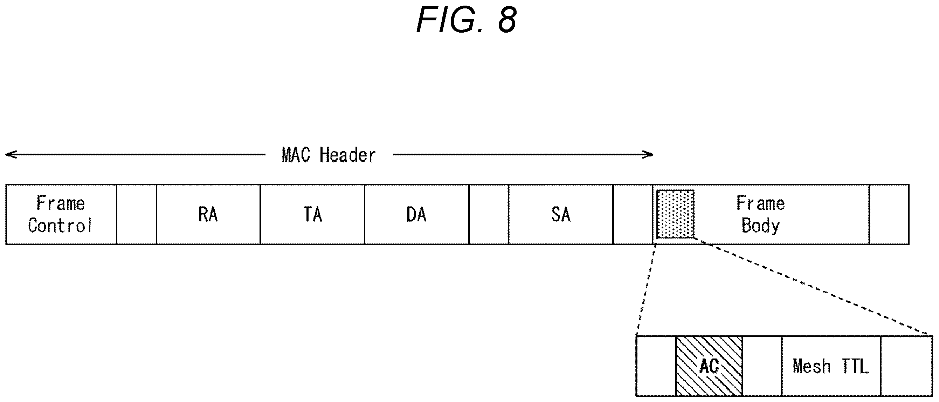

Fig. 8 is a diagram illustrating a first configuration example of a frame notified in relay transmission.

The frame with the first configuration in Fig. 8 is constituted from Frame Control, RA, TA, Destination Address (DA), Source Address (SA), and Frame Body. Note that the components are not restricted only to these.

The Frame Control includes information indicating that this frame is a frame to be notified in relay transmission.

The RA and the TA include information indicating a sending source device and a destination device, respectively.

The DA and the SA include information indicating a sink node and a source node, respectively.

The Frame Body is a data unit including the relay data, and the Frame Body includes the access category of the relay data and control information related to relay transmission.

While the fields from the Frame Control field to the field immediately before the Frame Body field are defined as MAC Header as indicated by the arrows in the drawing, note that the MAC Header has not been subjected to encryption.

The Frame Body includes each of the fields of Access Category (AC) and Mesh Time To Live (TTL) as well as the relay data.

The AC includes information indicating the access category of the relay data included in the Frame Body.

The Mesh TTL includes control information indicating the number of remaining hops at which the relay data included in the Frame Body is to be multi-hopped or the number of times the relay data has already been hopped.

The Frame Body field may be subjected to encryption as necessary.

Note that, as a constraint in a case where the frame with the first configuration in Fig. 8 is sent, it is necessary for the sending source device to have known, by notification of the capability information, that the destination device (that is, the device indicated by the RA field) of relay transmission satisfies the following conditions.

- The Relay Supporter field of the frame for the capability information notified by the destination device indicates that the function as a relay station is mounted.
- In a case where the Frame Body needs to be encrypted and sent, it is indicated in the Supporter Device Type field of the frame for the capability information notified by the destination device that at least a function of encryption decryption in relay transmission is equipped.

Note that, in a case where one access category is indicated in the AC field in the frame notified in relay transmission, the access category of the relay data included in the Frame Body is the one access category. That is, the Frame Body includes only data of one access category.

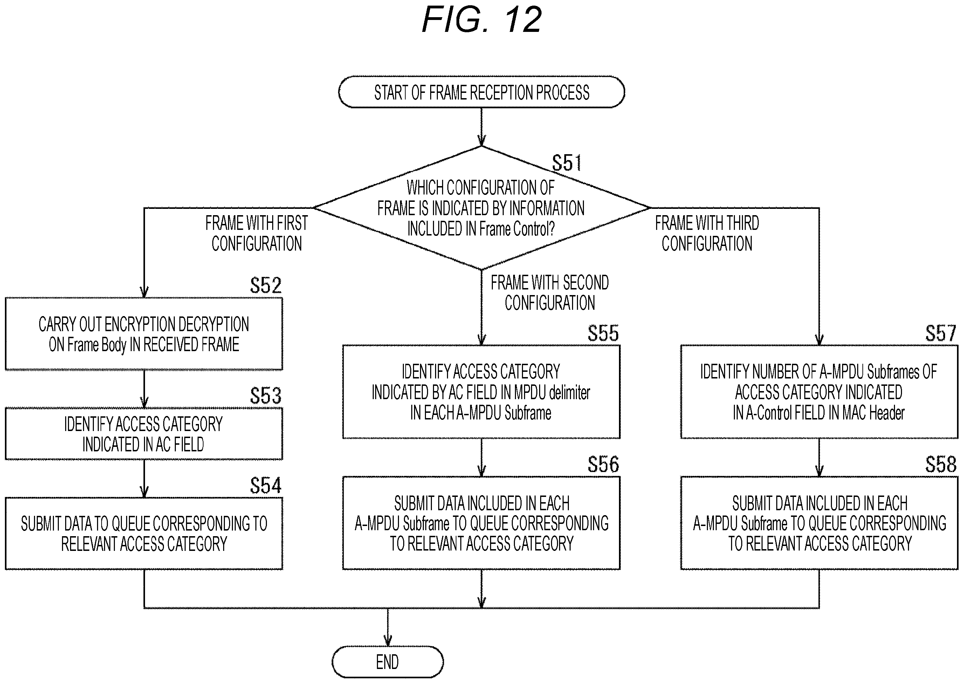

Next, an operation when the frame with the first configuration in Fig. 8 is received will be described. Note that an operation of receiving each of frames including the frame with the first configuration in Fig. 8 will be collectively described later with reference to Fig. 12.

The destination device (that is, the device indicated by the RA field) that has received this frame carries out, on the received frame, deaggregation of the A-MPDU, error detection and correction for the MAC Header, RA filtering, and the like and thereafter, submits (queues) the data traffic in the Frame Body to the queue corresponding to the access category indicated in the AC field.

Note that the queue for queuing may be designated on the basis of not only the access category but also the information indicated by the Mesh TTL field. That is, in a case where the queues are divided according to the access categories and the number of hops, the relay data may be queued in the corresponding queue.

In addition, as a constraint in a case where the frame with the first configuration in Fig. 8 is relayed, when relaying the relay data to the sink node or another relay node, the destination device that has received this frame may send the relay data in the frame with the first configuration illustrated in Fig. 8, for example. When the relay data is relayed, the right of sending is granted according to the backoff time in accordance with at least one of the access category or the number of hops.

### <Second Configuration Example of Frame>

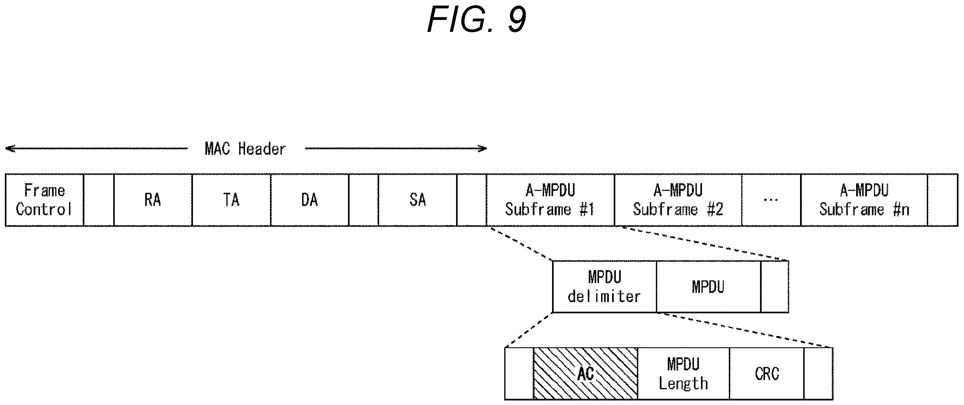

Fig. 9 is a diagram illustrating a second configuration example of a frame notified in relay transmission.

The frame with the second configuration in Fig. 9 is constituted from Frame Control, RA, TA, Destination Address (DA), Source Address (SA), and one or a plurality of A-MPDU Subframes. Note that the components are not restricted only to these.

The Frame Control includes information indicating that this frame is a frame to be notified in relay transmission.

The RA and the TA include information indicating a sending source device and a destination device, respectively.

The DA and the SA include information indicating a sink node and a source node, respectively.

The A-MPDU Subframe includes information regarding the relay data included in the A-MPDU Subframe, as well as the relay data.

While the fields from the Frame Control field to the field immediately before the A-MPDU Subframe #1 field are defined as MAC Header as indicated by the arrows in the drawing, note that the MAC Header has not been subjected to encryption. In addition, the control information related to relay transmission may be included in the MAC Header.

The A-MPDU Subframe includes an MPDU delimiter and an MPDU to which the relay data has been submitted. Note that the MPDU is to be subjected to encryption, but the MPDU delimiter is not to be subjected to encryption.

The MPDU delimiter includes each of the subfields of AC, MPDU Length, and CRC.

The AC includes information indicating the access category of the relay data included in the MPDU in the concerned A-MPDU Subframe.

The MPDU Length includes information indicating the bit length or the octet length of the MPDU in the concerned A-MPDU Subframe.

The CRC includes information for error detection and correction.

Note that the access categories of the relay data included in the MPDUs in the A-MPDU do not necessarily need to match between different A-MPDUs, but one access category of the relay data is included in one MPDU.

Note that, as a constraint in a case where the frame with the second configuration in Fig. 9 is sent, it is necessary for the sending source device to have known, by notification of the capability information, that the destination device (that is, the device indicated by the RA field) of relay transmission satisfies the following conditions.

- The Relay Supporter field of the frame for the capability information notified by the destination device indicates that the function as a relay station is mounted.
- It is indicated in the Supporter Device Type field of the frame for the capability information notified by the destination device that at least a function of encryption decryption in relay transmission is not equipped.

Note that, in a case where one access category is indicated in the AC field in the frame notified in relay transmission, the relay data included in the MPDU is data corresponding to the one access category. That is, one MPDU includes only data of one access category.

Next, an operation when the frame with the second configuration in Fig. 9 is received will be described. Note that an operation of receiving each of frames including the frame with the second configuration in Fig. 9 will be collectively described later with reference to Fig. 12.

The destination device (that is, the device indicated by the RA field) that has received this frame carries out, on the received frame, deaggregation of the A-MPDU, error detection and correction for the MAC Header, RA filtering, and the like and thereafter, submits (queues) the relay data in each MPDU to the queue corresponding to the access category indicated in the AC field.

Note that, in a case where the information indicating the number of remaining hops at which the relay data is to be multi-hopped or the number of times the relay data has already been hopped is included and notified, the queue for queuing may be designated on the basis of these pieces of information and the access category. That is, in a case where the queues are divided according to the access categories and the number of hops, the relay data may be queued in the corresponding queue.

In addition, as a constraint in a case where the frame with the second configuration in Fig. 9 is relayed, when relaying the relay data to the sink node or another relay node, the destination device that has received this frame may send the relay data in the frame of the second configuration example illustrated in Fig. 9, for example. When the relay data is relayed, the right of sending is granted according to the backoff time in accordance with at least one of the access category or the number of hops.

### <Third Configuration Example of Frame>

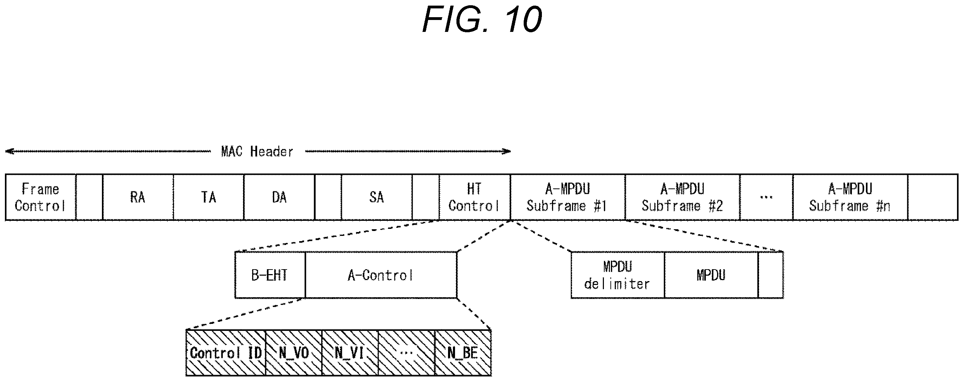

Fig. 10 is a diagram illustrating a third configuration example of a frame notified in relay transmission.

The frame with the third configuration in Fig. 10 is constituted from Frame Control, RA, TA, DA, SA, High Throughput (HT) Control, and one or more A-MPDU Subframes. Note that the components are not restricted only to these.

The Frame Control includes information indicating that this frame is a frame to be notified in relay transmission.

The RA and the TA include information indicating a sending source device and a destination device, respectively.

The DA and the SA include information indicating a sink node and a source node, respectively.

The HT Control includes information regarding access categories included in subsequent A-MPDU Subframes.

The A-MPDU Subframe includes information regarding the relay data included in the A-MPDU Subframe, as well as the relay data. That is, the A-MPDU Subframe includes the MPDU that is a data unit including the relay data, and the MPDU Delimiter including the bit length or the octet length of the MPDU, and CRC.

While the fields from the Frame Control field to the field immediately before the A-MPDU Subframe #1 field are defined as MAC Header as indicated by the arrows in the drawing, note that the MAC Header has not been subjected to encryption. In addition, the control information related to relay transmission may be included in the MAC Header.

The HT Control is made up of Beyond Extremely High Throughput (B-EHT) and Aggregated (A)-Control subfields.

The B-EHT includes information indicating that there is the A-Control subfield immediately after the B-EHT.

The A-Control includes information indicating the access category of the A-MPDU Subframe included in this frame.

The A-Control includes each of the subfields of Control ID, N_VO, N_VI, and N_BE.

The Control ID includes information indicating that there are N_VO, N_VI, and N_BE subsequently.

The N_VO includes information indicating the number of A-MPDU Subframes of which the MPDU includes the relay data of the access category corresponding to voice (VO) communication.

The N_VI includes information indicating the number of A-MPDU Subframes of which the MPDU includes the relay data of the access category corresponding to video (VI) communication.

The N_BE includes information indicating the number of A-MPDU Subframes of which the MPDU includes data of the access category corresponding to the relay data that is permitted to communicate by best effort (BE).

Although three subfields of N_VO, N_VI, and N_BE are illustrated in Fig. 10, in a case where an access category is defined other than VO, VI, and BE, the corresponding subfield may be included.

Although a case where a plurality of A-MPDU Subframes is included is illustrated in the drawing, only one access category of the relay data is included in the MPDU in the A-MPDU Subframe. That is, for example, the relay data corresponding to the access categories of VO and VI will not coexist in one MPDU and is divided into different MPDUs.

In addition, the A-MPDU Subframes are arranged in the order of priority of the access categories of the relay data included in the MPDUs. At this time, N_VO, N_VI, N_BE, and the like in the A-Control subfield are also arranged in the order of priority of the corresponding access categories.

As a specific example, when there are three access categories of VO, VI, and BE, and priority is specified with a relationship of VO > VI > BE, the subfields are arranged in the order of N_VO, N_VI, and N_BE in the A-Control subfield.

In addition, for example, the A-MPDU Subframes including MPDUs to which the relay data corresponding to VO has been submitted are arranged from the A-MPDU Subframes #1 to #k, the A-MPDU Subframes including MPDUs to which the relay data corresponding to VI has been submitted are arranged from the A-MPDU Subframes #(k+1) to #l, the A-MPDU Subframes including MPDUs to which the relay data corresponding to BE has been submitted are arranged from the A-MPDU Subframes #(l+1) to #N, and the A-MPDU Subframes are sent. In the above, k, l, and N are any natural numbers and have a relationship of k < 1 < N.

Note that, as a constraint in a case where the frame with the third configuration in Fig. 10 is sent, it is necessary for the sending source device to have known, by notification of the capability information, that the destination device (that is, the device indicated by the RA field) of relay transmission satisfies the following conditions.

- The Relay Supporter field of the frame for the capability information notified by the destination device indicates that the function as a relay station is mounted.
- It is indicated in the Supporter Device Type field of the frame for the capability information notified by the destination device that a function of decryption in relay transmission is not equipped.

Next, an operation when the frame with the third configuration in Fig. 10 is received will be described. Note that an operation of receiving each of frames including the frame with the third configuration in Fig. 10 will be collectively described later with reference to Fig. 12.

The destination device (that is, the device indicated by the RA field) that has received this frame carries out, on the received frame, deaggregation of the A-MPDU, error detection and correction for the MAC Header, RA filtering, and the like and thereafter, submits (queues) data in each MPDU to the queue corresponding to the access category indicated in the A-Control field.

Note that, in a case where the information indicating the number of remaining hops at which the data is to be multi-hopped or the number of times the data has already been hopped is included and notified, the queue for queuing may be designated on the basis of these pieces of information and the access category. That is, in a case where the queues are divided according to the access categories and the number of hops, the relay data may be queued in the corresponding queue.

In addition, as a constraint in a case where the frame with the third configuration in Fig. 10 is sent, when sending the relay data to the sink node or another relay node, the destination device that has received this frame may send the relay data in the frame with the third configuration illustrated in Fig. 10, for example. When the relay data is relayed, the right of sending is granted according to the backoff time in accordance with at least one of the access category or the number of hops.

### <Process of Sending Source Device>

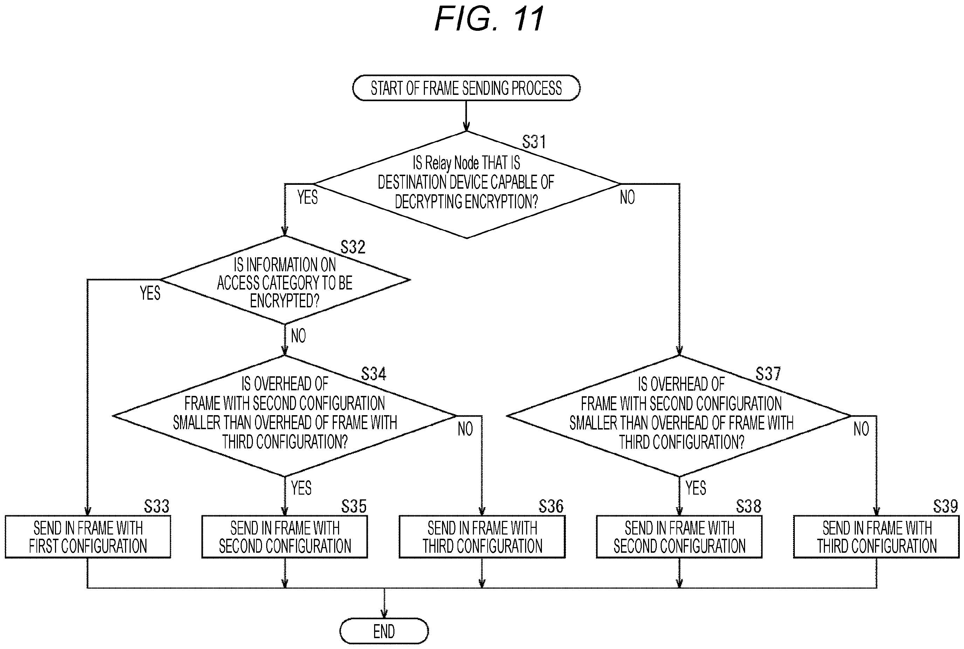

Fig. 11 is a flowchart explaining a process in a sending source device when sending a frame.

In the sending source device, the frames with the first to third configurations described above may be selected and generated appropriately and sent according to the capability of the destination device and the overhead of the data to be sent. The overhead mentioned here refers to the field length of information indicating the access category. For example, in the frame with the second configuration, the field length may have the total value of the AC field lengths included in each A-MPDU Subframe, and in the frame with the third configuration, the field length may have the total of the field lengths of N_VO, N_VI,..., and N_BE, or the HT Control field length.

In Fig. 11, a case where the sending source device is a source node will be described.

In step S31, the source node determines whether or not the relay node that is the destination device is capable of decrypting encryption.

The determination in step S31 may be carried out on the basis of information on the capability of the destination device notified by the notification of the capability information. For example, in a case where information indicating that the relay node is not capable of decrypting encryption is included in the Supporter Device Type field in the frame notified by the relay node with notification of the capability information, the source node determines that the relay node is not capable of decrypting encryption.

In a case where it is determined in step S31 that the relay node as the destination device is capable of decrypting encryption, the process proceeds to step S32.

In step S32, the source node determines whether or not to encrypt the information on the access category. In a case where it is determined in step S32 that the information on the access category is to be encrypted, the process proceeds to step S33.

In step S33, the source node sends the relay data to the relay node in the frame with the first configuration.

In a case where it is determined in step S32 that the information on the access category is not to be encrypted, the process proceeds to step S34.

In step S34, the source node determines whether or not the overhead of the frame with the second configuration is smaller than the overhead of the frame with the third configuration. In a case where it is determined in step S34 that the overhead of the frame with the second configuration is smaller than the overhead of the frame with the third configuration, the process proceeds to step S35.

In step S35, the source node sends the relay data to the relay node in the frame with the second configuration.

In a case where it is determined in step S34 that the overhead of the frame with the second configuration is larger than the overhead of the frame with the third configuration, or the overhead of the frame with the second configuration is the same as the overhead of the frame with the third configuration, the process proceeds to step S36.

In step S36, the source node sends the relay data to the relay node in the frame with the third configuration.

On the other hand, in a case where it is determined in step S31 that the relay node as the destination device is not capable of decrypting encryption, the process proceeds to step S37.

In step S37, the source node determines whether or not the overhead of the frame with the second configuration is smaller than the overhead of the frame with the third configuration. In a case where it is determined in step S37 that the overhead of the frame with the second configuration is smaller than the overhead of the frame with the third configuration, the process proceeds to step S38.

In step S38, the source node sends the relay data to the relay node in the frame with the second configuration.

In a case where it is determined in step S37 that the overhead of the frame with the second configuration is larger than the overhead of the frame with the third configuration, or the overhead of the frame with the second configuration is the same as the overhead of the frame with the third configuration, the process proceeds to step S39.

In step S39, the source node sends the relay data to the relay node in the frame with the third configuration.

After step S33, S35, S36, S38, or S39, the sending process ends.

By processing as described above, the relay data can be transmitted in a frame with a configuration according to the overhead of the relay data or the availability of the encryption function.

In addition, since the frames with the first to third configurations all include the information regarding the access category of the relay data, queuing can be performed for each access category at the receiving side.

This enables to transmit the relay data with a low delay.

### <Operation of Destination Device>

Fig. 12 is a flowchart explaining a process in a destination device when receiving a frame.

Note that information for identifying the frames with the first to third configurations illustrated in Figs. 9 to 11 is included in the Frame Control field in each frame. That is, the destination device determines which one of the frames with the first to third configurations illustrated in Figs. 9 to 11 is relevant to the frame that has been received, on the basis of the information included in the Frame Control field in the frame that has been received.

In Fig. 12, a case where the destination device, that is, the device at the receiving side is a relay node will be described.

In step S51, the relay node determines which configuration of the frame is indicated by the information included in the Frame Control field of the frame that has been received.

In a case where it is determined in step S51 that the information indicating the frame with the first configuration is included, the process proceeds to step S52.

In step S52, the relay node carries out encryption decryption on the Frame Body in the received frame.

In step S53, the relay node identifies the access category indicated in the AC field included in the Frame Body on which the encryption decryption has been carried out.

In step S54, the relay node submits the relay data to the queue corresponding to the relevant access category.

Note that the relay data submitted here is a payload in the Frame Body. That is, the AC field and the Mesh TTL field illustrated in Fig. 8 does not have to be targeted. At this time, the information indicated in the AC field and the Mesh TTL field may be stored in any unit in the receiving side device as necessary, and necessary information may be attached at the time of sending process.

The unit that stores information indicated in the AC field and the Mesh TTL field (hereinafter, the storage unit) may be connected to the wireless control unit 51 and the data processing unit 52. In addition, when the queued data is sent, the information in the AC field and the Mesh TTL field may be attached in the data processing unit 52.

In a case where it is determined in step S51 that the information indicating the frame with the second configuration is included, the process proceeds to step S55.

In step S55, the relay node identifies the access category indicated by the AC field included in the MPDU delimiter in each A-MPDU Subframe.

In step S56, the relay node submits the relay data included in each A-MPDU Subframe to the corresponding queue for each relevant access category.

Note that the relay data submitted here is a payload in the A-MPDU Subframe. That is, the MPDU delimiter illustrated in Fig. 9 is not targeted.

In a case where it is determined in step S51 that the information indicating the frame with the third configuration is included, the process proceeds to step S57.

In step S57, the relay node identifies the number of A-MPDU Subframes of each access category indicated in the A-Control field in the MAC Header.

In step S58, the relay node submits the relay data included in each A-MPDU Subframe to the corresponding queue for each relevant access category.

Note that the relay data submitted here is a payload in the A-MPDU Subframe. That is, the MPDU delimiter illustrated in Fig. 10 does not have to be a targeted.

After step S54, S56, or S58, the reception process ends.

As described above, in the case of the frame with the first configuration, the information regarding the access category is encrypted and included such that the information regarding the access category can be read in the MAC Sublayer. Therefore, by decrypting the information, the information regarding the access category can be acquired earlier than in a case where the information encrypted in an upper layer is decrypted and acquired as in the conventional technique. This enables to transmit the relay data with a low delay.

In addition, in the case of the frame with the second or third configuration, along with the advantages of the frame with the first configuration, the information regarding the access category can be acquired without performing encryption decryption. Therefore, queuing is enabled for each access category without taking processing time, and thus the relay data can be transmitted with a lower delay.

### <3. Others>

### <Effects of Present Technology>

As described above, in the present technology, a frame including relay data to be relayed in another wireless communication device and information regarding the access category of the relay data is sent to the another wireless communication device.

Data can be queued for each access category according to the information regarding the access category of the relay data. Therefore, the relay data can be transmitted with a low delay.

This enables to relay and transmit data that needs to be immediately sent, with a low delay.

### <Configuration Example of Computer>

The series of processes described above can be executed by hardware and also can be executed by software. In a case where the series of processes is executed by software, a program constituting the software is installed from a program recording medium to a computer incorporated in dedicated hardware, a general-purpose personal computer, or the like.

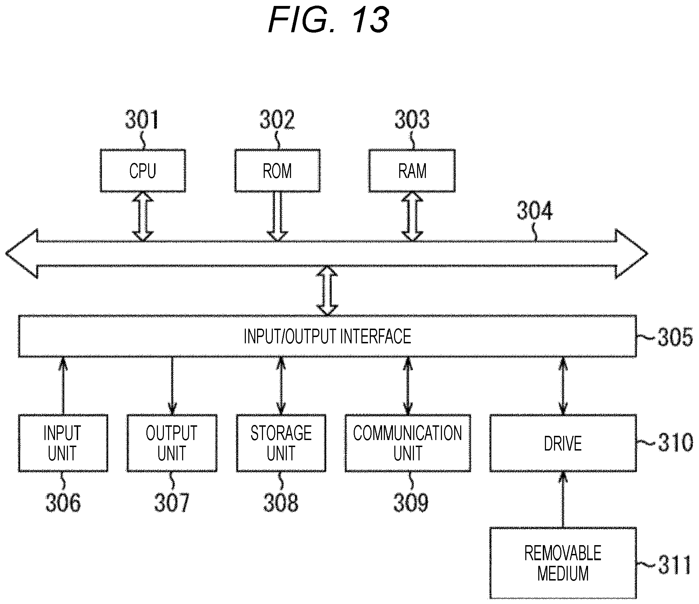

Fig. 13 is a block diagram illustrating a configuration example of hardware of a computer that executes the above-described series of processes by a program.

A central processing unit (CPU) 301, a read only memory (ROM) 302, and a random access memory (RAM) 303 are mutually connected by a bus 304.

Furthermore, an input/output interface 305 is connected to the bus 304. An input unit 306 including a keyboard, a mouse, and the like, and an output unit 307 including a display, a speaker, and the like are connected to the input/output interface 305. In addition, a storage unit 308 including a hard disk, a nonvolatile memory, or the like, a communication unit 309 including a network interface or the like, and a drive 310 that drives a removable medium 311 are connected to the input/output interface 305.

In the computer configured as described above, the series of processes described above is performed, for example, by the CPU 301 loading the program stored in the storage unit 308 into the RAM 303 via the input/output interface 305 and the bus 304 and executing the program.

The program to be executed by the CPU 301 is provided, for example, by being recorded on the removable medium 311 or via a wired or wireless transmission medium such as a local area network, the Internet, or digital broadcasting and is installed in the storage unit 308.

Note that the program executed by the computer may be a program that performs processes in time series in the order described in the present description, or a program that performs processes in parallel or at a necessary timing such as when a call is made.

Note that, in the present description, a system means an assembly of a plurality of components (devices, modules (parts), and the like), and it does not matter whether or not all the components are located in the same housing. Therefore, a plurality of devices housed in separate housings and connected via a network and one device in which a plurality of modules is housed in one housing are both systems.

In addition, the effects described in the present description are merely examples and not restrictive, and there may also be other effects.

The embodiment of the present technology is not restricted to the embodiments described above, and various modifications can be made without departing from the spirit of the present technology.

For example, the present technology may be configured as cloud computing in which one function is shared by a plurality of devices via a network and processed in cooperation.

In addition, each of the steps in the flowcharts described above can be executed by one device and also can be executed by a plurality of devices in a shared manner.

Furthermore, in a case where a plurality of processes is included in one step, the plurality of processes included in one step can be executed by one device and also can be executed in a shared manner by a plurality of devices.

### <Example of Configuration Combinations>

The present technology can also be configured as follows.
(1) A wireless communication device including
   a wireless control unit that controls to send a frame including relay data to be relayed in another wireless communication device and information regarding an access category of the relay data, to the another wireless communication device.
(2) The wireless communication device according to (1) above, in which
   the wireless control unit controls to send the frame made up of a data unit including only the relay data of the access category.
(3) The wireless communication device according to (2) above, in which
   the information regarding the access category and control information related to relay transmission are included in the data unit.
(4) The wireless communication device according to (3) above, in which
   the data unit is encrypted on the basis of capability information indicating capability of the another wireless communication device, the capability information being notified by the another wireless communication device.
(5) The wireless communication device according to (2) above, in which
   the frame is constituted from a header including control information related to relay transmission, and a plurality of subframes made up of delimiter information including the information regarding the access category of the relay data included in the data unit, and the data unit.
(6) The wireless communication device according to (2) above, in which
   the frame is constituted from a header including the information regarding the access category and control information related to relay transmission, and a plurality of subframes made up of delimiter information and the data unit.
(7) The wireless communication device according to (6) above, in which
   the information regarding the access category includes, for each of the access categories, information indicating the number of frames with the subframes made up of the data unit including the relay data of the access category.
(8) The wireless communication device according to (7) above, in which
   the information regarding the access category and the subframes made up of the data unit including the relay data of the access category are both arranged in order of priority of the access category.
(9) A wireless communication method including
   controlling to send a frame including relay data to be relayed in another wireless communication device and information regarding an access category of the relay data, to the another wireless communication device, by a wireless communication device.
(10) A wireless communication device including:
   a reception unit that receives a frame including relay data to be relayed to another wireless communication device and information regarding an access category of the relay data; and
   a data processing unit that queues the relay data of the access category for each of the access categories on the basis of the information regarding the access category.
(11) The wireless communication device according to (10) above, in which
   the frame is made up of a data unit including only the relay data of the access category.
(12) The wireless communication device according to (11) above, in which
   the information regarding the access category and control information related to relay transmission are included in the data unit.
(13) The wireless communication device according to (12) above, in which
   the data processing unit decrypts encryption of the data unit on the basis of information indicating a frame configuration, the information being included in the frame, and queues the relay data of the access category for each of the access categories on the basis of the information regarding the access category of the data unit for which the encryption has been decrypted.
(14) The wireless communication device according to (11) above, in which
   the frame is constituted from a header including control information related to relay transmission, and a plurality of subframes made up of delimiter information including the information regarding the access category of the relay data included in the data unit, and the data unit, and
   the data processing unit queues the relay data of the access category for each of the access categories on the basis of the information regarding the access category included in the delimiter information.
(15) The wireless communication device according to (11) above, in which
   the frame is constituted from a header including the information regarding the access category and control information related to relay transmission, and a plurality of subframes made up of delimiter information and the data unit, and
   the data processing unit queues the relay data of the access category for each of the access categories on the basis of the information regarding the access category included in the header.
(16) The wireless communication device according to (15) above, in which
   the information regarding the access category includes, for each of the access categories, information indicating the number of frames with the subframes made up of the data unit including the relay data of the access category.
(17) The wireless communication device according to (16) above, in which
   the information regarding the access category and the subframes made up of the data unit including the relay data of the access category are both arranged in order of priority of the access category.
(18) A wireless communication method including:
   receiving a frame including relay data to be relayed to another wireless communication device and information regarding an access category of the relay data; and
   queuing the relay data of the access category for each of the access categories on the basis of the information regarding the access category, by a wireless communication device.

### REFERENCE SIGNS LIST

- 11: Wireless communication device
- 31: Communication unit
- 32: Control unit
- 41: Antenna
- 51: Wireless control unit
- 52: Data processing unit
- 53: Modulation-demodulation unit
- 54: Signal processing unit
- 55: Channel estimation unit
- 56, 56-1 to 56-n: Wireless interface unit
- 57, 57-1 to 57-n: Amplifier unit

## Claims

1. A wireless communication device comprising
a wireless control unit that controls to send a frame including relay data to be relayed in another wireless communication device and information regarding an access category of the relay data, to the another wireless communication device.

2. The wireless communication device according to claim 1, wherein the wireless control unit controls to send the frame made up of a data unit including only the relay data of the access category.

3. The wireless communication device according to claim 2, wherein the information regarding the access category and control information related to relay transmission are included in the data unit.

4. The wireless communication device according to claim 3, wherein the data unit is encrypted on a basis of capability information indicating capability of the another wireless communication device, the capability information being notified by the another wireless communication device.

5. The wireless communication device according to claim 2, wherein the frame is constituted from a header including control information related to relay transmission, and a plurality of subframes made up of delimiter information including the information regarding the access category of the relay data included in the data unit, and the data unit.

6. The wireless communication device according to claim 2, wherein the frame is constituted from a header including the information regarding the access category and control information related to relay transmission, and a plurality of subframes made up of delimiter information and the data unit.

7. The wireless communication device according to claim 6, wherein the information regarding the access category includes, for each of the access categories, information indicating the number of frames with the subframes made up of the data unit including the relay data of the access category.

8. The wireless communication device according to claim 7, wherein the information regarding the access category and the subframes made up of the data unit including the relay data of the access category are both arranged in order of priority of the access category.

9. A wireless communication method comprising
controlling to send a frame including relay data to be relayed in another wireless communication device and information regarding an access category of the relay data, to the another wireless communication device, by a wireless communication device.

10. A wireless communication device comprising:
a reception unit that receives a frame including relay data to be relayed to another wireless communication device and information regarding an access category of the relay data; and
a data processing unit that queues the relay data of the access category for each of the access categories on a basis of the information regarding the access category.

11. The wireless communication device according to claim 10, wherein the frame is made up of a data unit including only the relay data of the access category.

12. The wireless communication device according to claim 11, wherein the information regarding the access category and control information related to relay transmission are included in the data unit.

13. The wireless communication device according to claim 12, wherein the data processing unit decrypts encryption of the data unit on a basis of information indicating a frame configuration, the information being included in the frame, and queues the relay data of the access category for each of the access categories on a basis of the information regarding the access category of the data unit for which the encryption has been decrypted.

14. The wireless communication device according to claim 11, wherein
the frame is constituted from a header including control information related to relay transmission, and a plurality of subframes made up of delimiter information including the information regarding the access category of the relay data included in the data unit, and the data unit, and
the data processing unit queues the relay data of the access category for each of the access categories on a basis of the information regarding the access category included in the delimiter information.

15. The wireless communication device according to claim 11, wherein
the frame is constituted from a header including the information regarding the access category and control information related to relay transmission, and a plurality of subframes made up of delimiter information and the data unit, and
the data processing unit queues the relay data of the access category for each of the access categories on a basis of the information regarding the access category included in the header.

16. The wireless communication device according to claim 15, wherein the information regarding the access category includes, for each of the access categories, information indicating the number of frames with the subframes made up of the data unit including the relay data of the access category.

17. The wireless communication device according to claim 16, wherein the information regarding the access category and the subframes made up of the data unit including the relay data of the access category are both arranged in order of priority of the access category.

18. A wireless communication method comprising:
receiving a frame including relay data to be relayed to another wireless communication device and information regarding an access category of the relay data; and
queuing the relay data of the access category for each of the access categories on a basis of the information regarding the access category, by a wireless communication device.
